# EUROPÄISCHE PATENTSCHRIFT

(11) **EP 1 747 108 B1**
(45) Veröffentlichungstag und Bekanntmachung des Hinweises auf die Patenterteilung: **22.04.2009**
(21) Anmeldenummer: 05745721.0
(22) Anmeldetag: 04.05.2005
(51) Int. Cl.: B60H 1/00

(54) **SYSTEM ZUR KRAFTFAHRZEUG-BELÜFTUNG UND/ODER -TEMPERIERUNG**
SYSTEM FOR VENTILATING AND/OR TEMPERING A MOTOR VEHICLE
SYSTEME DE VENTILATION ET/OU DE THERMOSTABILISATION POUR AUTOMOBILE

(30) Priorität: 13.05.2004 DE 102004024069
(43) Veröffentlichungstag der Anmeldung: 31.01.2007
(73) Patentinhaber: Behr GmbH & Co. KG, 70469 Stuttgart (DE); Behr Brasil Ltda., 07400-970 Aruja, Sao Paolo (BR)
(72) Erfinder: FISCHLE, Jochen, 71332 Waiblingen (DE); SCHWEIZER, Gebhard, 71229 Leonberg (DE); KAWAGUCHI, Masaaki, CEP 13090-331 Campinas (BR); KLEBER, Oliveira, CEP-08745-140 Mogi das Cruzes (BR)
(74) Vertreter: Grauel, Andreas
(86) Internationale Anmeldenummer: PCT/EP2005/004856
(87) Internationale Veröffentlichungsnummer: WO 2005/110783

(56) Entgegenhaltungen:
- EP-A- 0 983 887
- DE-A1- 3 149 252
- DE-A1- 10 042 683
- US-A- 5 803 160

## Beschreibung

Die Erfindung betrifft ein System zur Kraftfahrzeug-Belüftung und/oder - Temperierung gemäß dem Oberbegriff des Anspruchs 1, und wie in DE-A1-3 149 252 offenbart.

Bei Kraftfahrzeugen ist in der Basisversion zumindest eine Gebläseanordnung, welche nicht temperierte Umgebungsluft und/oder Umluft dem Fahrzeuginnenraum über ein Belüftungssystem, bestehend aus einer Mehrzahl von Luftkanälen und Lufteinlassdüsen, zuführt, vorgesehen.

Soll diese Basisversion beispielsweise durch eine Klimaanlage ersetzt werden, so wird üblicherweise die Gebläseanordnung entnommen und dieselbe durch eine Klimaanlage mit Verdampfer und Heizer sowie dazugehöriger Gebläseanordnung ersetzt. Ein derartiger Umbau ist relativ zeitaufwändig und teuer.

Es ist Aufgabe der Erfindung, ein verbessertes, insbesondere kostengünstigeres System zur Verfügung zu stellen, das insbesondere für unterschiedliche Ausstattungen einer Fahrzeugserie geeignet ist.

Diese Aufgabe wird gelöst durch ein System mit den Merkmalen des Anspruchs 1. Vorteilhafte Ausgestaltungen sind Gegenstand der Unteransprüche.

Erfindungsgemäß ist ein System zur Kraftfahrzeug-Belüftung und/oder Temperierung mit einer Basisversion, welche zumindest eine Gebläseanordnung aufweist, die Teil eines Kraftfahrzeug-Belüftungssystems ist, wobei die Gebläseanordnung zumindest ein in einem mehrteiligen Luftführungsgehäuse angeordnetes Lüfterrad und einen dieses Lüfterrad antreibenden Motor aufweist, und das weitere Belüftungssystem aus einer Mehrzahl von Luftkanälen und Lufteinlassdüsen besteht, wobei das System modular erweiterbar ist, wofür mindestens ein Bereich des Luftführungsgehäuse austauschbar ausgebildet ist. Durch das zur Verfügungstellen einer Mehrzahl von unabhängig zueinander kombinierbarer Versionen auf Grundlage einer gemeinsamen Basisversion ergibt sich die Möglichkeit ein bestehendes System, sei es die Basisversion oder eine bereits erweiterte Version, kostengünstig zu erweitern, wobei im Wesentlichen lediglich Bereiche des Luftführungsgehäuses ausgetauscht werden müssen und die alten Komponenten weiterverwendet werden können. Bevorzugt ist an die Gebläseanordnung durch Entfernen und Ersetzen eines Bereichs des Luftführungsgehäuses ein Heizer und/oder ein Verdampfer mit einem entsprechenden Bereich des Luftführungsgehäuses anbaubar.

In das Luftführungsgehäuse ist vorzugsweise ein Luftfilter integrierbar, wobei der Luftfilter unabhängig von einer weiteren Veränderung des Systems ist, das heißt, er kann auch direkt in die Basisversion integriert werden.

Bevorzugt ist in das Luftführungsgehäuse auch eine Temperatursteuerung integrierbar, so dass die Leistungsregelung von Verdampfer und Heizer in Abhängigkeit der Ist- und Soll-Temperatur des Innenraums erfolgt.

Um die Temperatur der dem Fahrzeuginnenraum über ein Belüftungssystem zuzuführenden Luft zu regeln ist bevorzugt zumindest ein Temperiermittel, insbesondere eine Mischklappe oder eine Rollbandkassette in das System einbaubar.

Das System weist vorzugsweise eine Bedienkonsole mit zumindest einem Bedienelement auf, welches im Fahrzeuginnenraum angeordnet ist, wobei die Bedienkonsole oder das zumindest eine Bedienelement in einem austauschbaren und/oder erweiterbaren Bereich ausgebildet ist. Entsprechend kann das System mindestens eine Anzeige aufweisen, welche im Fahrzeuginnenraum angeordnet ist, wobei die Anzeige in einem austauschbaren und/oder erweiterbaren Bereich ausgebildet ist. Dies ermöglicht eine einfache Erweiterung mittels Austauschens einer Bedienkonsole, einzelner Bedienelemente und/oder der Anzeige oder mittels Ausbauens einer Blende und Einbauens der Bedienkonsole, einzelner Bedienelemente und/oder der Anzeige.

Um eine ausreichende Gebläseleistung zur Verfügung stellen zu können, ist der Motor der Gebläseanordnung bevorzugt modular austauschbar ausgebildet, so dass er bei Bedarf, das heißt wenn auf Grund von Einbauten, wie sehr feinen Luftfiltern, der Strömungswiderstand deutlich erhöht ist und die Gebläseleistung der Basisversion nicht ausreicht, beispielsweise durch eine Variante mit größerer Leistung ersetzt werden kann.

Im Folgenden wird die Erfindung anhand eines Ausführungsbeispiels unter Bezugnahme auf die Zeichnung im Einzelnen erläutert. In der Zeichnung zeigen:
- Fig. 1: eine schematische Darstellung eines Systems zur Kraftfahrzeug-Belüftung und/oder -Temperierung gemäß der Basisversion, .
- Fig. 2: eine schematische Darstellung des Systems von Fig. 1 in einer erweiterten Version mit Heizer,
- Fig. 3: eine schematische Darstellung des Systems von Fig. 1 in einer alternativen erweiterten Version mit Verdampfer,
- Fig. 4: eine schematische Darstellung des Systems von Fig. 1 in einer erweiterten Version mit Verdampfer und Heizer,

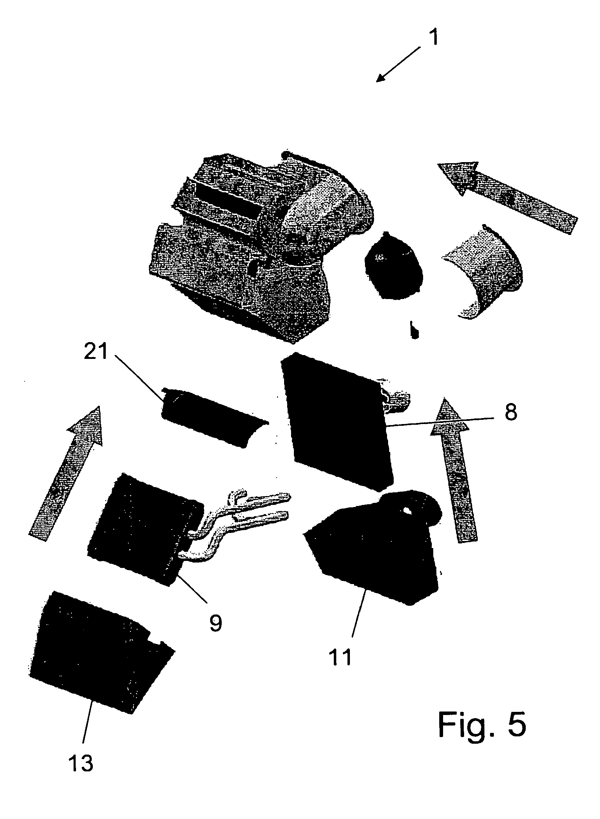

- Fig. 5: eine Art Explosionsdarstellung des Systems mit den verschiedenen Bauteilen,

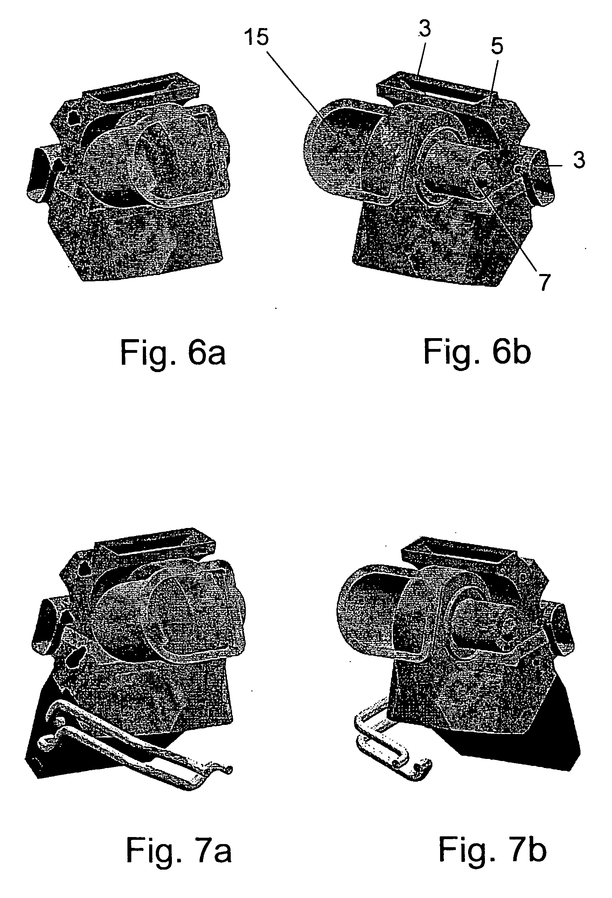

- Fig. 6a und b: verschiedene perspektivische Ansichten des Systems gemäß Fig. 1,
- Fig. 7a und b: verschiedene perspektivische Ansichten des Systems gemäß Fig. 2,

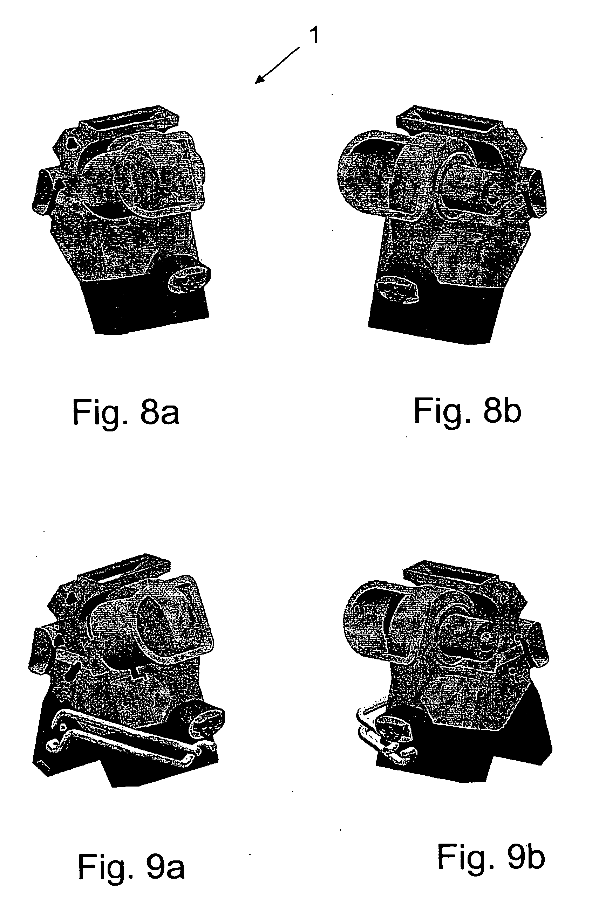

- Fig. 8a und b: verschiedene perspektivische Ansichten des Systems gemäß Fig. 3,
- Fig. 9a und b: verschiedene perspektivische Ansichten des Systems gemäß Fig. 4,

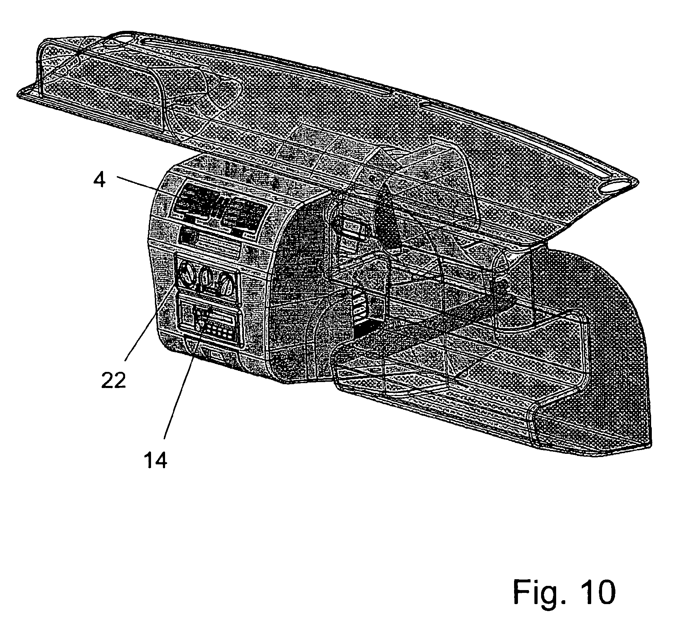

- Fig. 10: eine perspektivische Ansicht eines Armaturenbretts mit einem Teil des Systems in der umfassendsten Version, wie in Fig. 4 dargestellt,

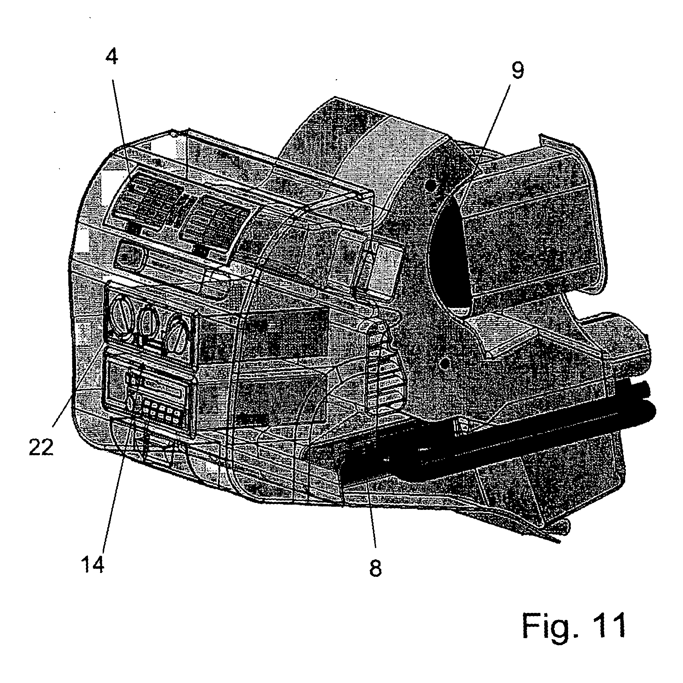

- Fig. 11: eine perspektivische, vergrößerte Ansicht des zentralen Bereichs von Fig. 10,
- Fig. 12a: Ansicht einer Bedienkonsole für ein System gemäß Fig. 1,
- Fig. 12b: Ansicht einer Bedienkonsole für ein System gemäß Fig. 3, und
- Fig. 12c: Ansicht einer Bedienkonsole für ein System gemäß Fig. 4.

Ein Kraftfahrzeug weist in seiner in Hinblick auf die Belüftungs- und Temperierungstechnik gesehenen Basisversion zur Belüftung des Fahrzeuginnenraums ein Belüftungssystem 1 auf. Das Belüftungssystem 1 umfasst eine Gebläseanordnung 2 und eine Mehrzahl von Luftkanälen 3 und Lufteinlassdüsen 4, durch welche bei Bedarf vorliegend untemperierte Luft dem Fahrzeuginnenraum zuführbar ist. Die Gebläseanordnung 2 weist ein in einem mehrteiligen Luftführungsgehäuse 5 angeordnetes Lüfterrad 6 und einen dieses Lüfterrad 6 antreibenden Motor 7 auf.

Das Luftführungsgehäuse 5 ist derart ausgebildet, dass einzelne Bereiche desselben entfernt und durch andere, insbesondere andersartig ausgebildete Bereiche, in welchen zusätzliche Komponenten, wie Heizer 8, Verdampfer 9 und/oder gegebenenfalls auch Luftfilter (nicht dargestellt) angeordnet sein können. Hierbei bleiben die wesentlichen Bereiche der Gebläseanordnung 2, wie insbesondere das Lüfterrad 6, unverändert.

Vorliegend erfolgt das Entfernen der einzelnen Bereiche des Luftführungsgehäuses 5 mittels Trennen. Die Ränder der zu entfernenden Bereiche sind als Sollbruchstellen ausgebildet, so dass ein Herausbrechen möglich ist.

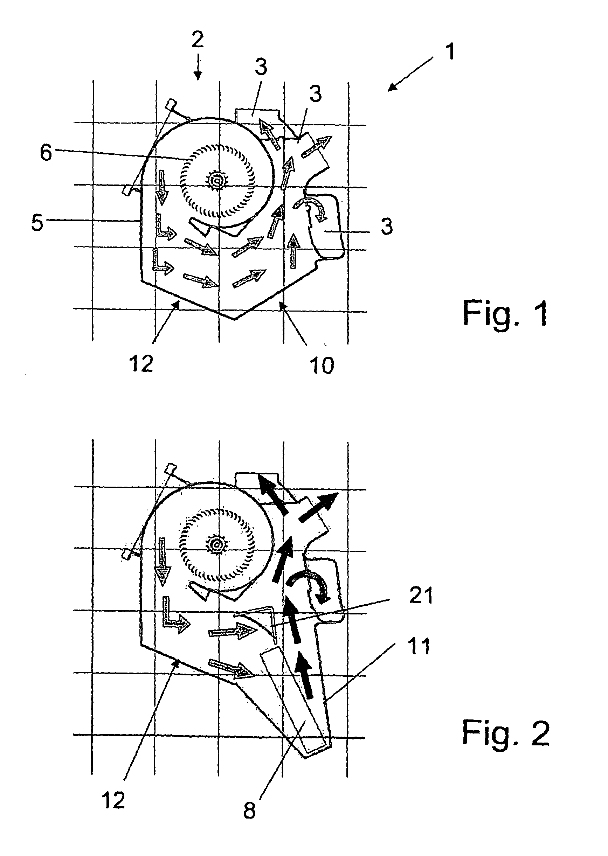

Soll die Basisversion um einen Heizer 8 erweitert werden, so wird der in Fig. 1 mit 10 bezeichnete Bereich des Luftführungsgehäuses 5 abgetrennt und der Heizer 8 mit dem ihn umgebenden Luftführungsgehäuse-Bereich 11 montiert (vgl. Fig. 2).

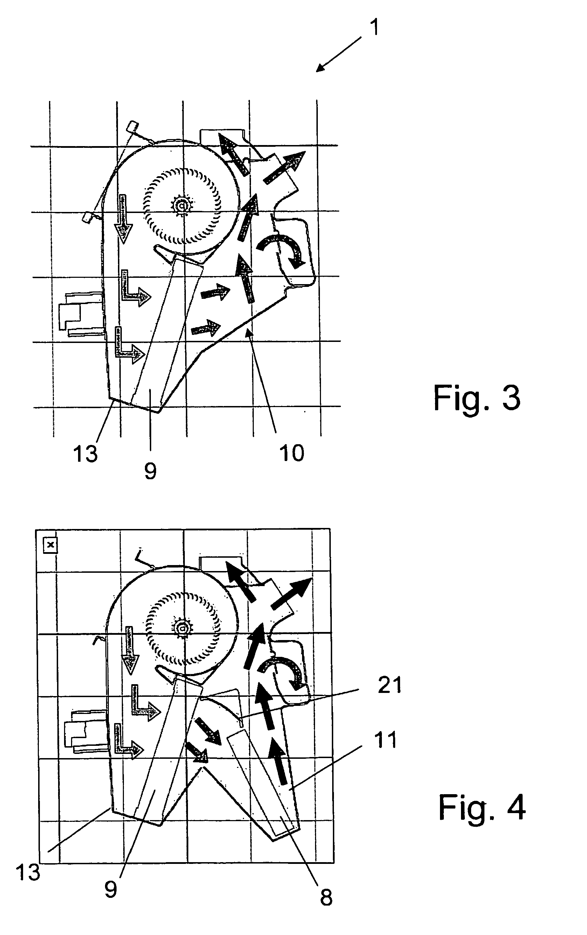

Soll die Basisversion um einen Verdampfer 9 erweitert werden, so wird der in Fig. 1 mit 12 bezeichnete Bereich des Luftführungsgehäuses 5 abgetrennt und der Verdampfer 9 mit dem ihn umgebenden Luftführungsgehäuse-Bereich 13 montiert (vgl. Fig. 3).

Soll die Basisversion um einen Heizer 8 und einen Verdampfer 9 erweitert werden, so werden die in Fig. 1 mit 10 und 12 bezeichneten Bereiche des Luftführungsgehäuses 5 abgetrennt und der Heizer 8 sowie Verdampfer 9 mit den sie umgebenden Luftführungsgehäuse-Bereichen 11 und 13 montiert (vgl. Fig. 4).

Im Falle einer Version mit Klimaanlage, das heißt mit Heizer 8 und Verdampfer 9 oder gegebenenfalls auch nur mit einem Verdampfer 9 kann eine verbesserte Temperaturregelung in Abhängigkeit der Fahrzeuginnenraum-Temperatur an Stelle einer einfachen Einstellung einer bestimmten Leistung vorgesehen sein.

Bevorzugt ist der innenseitige Bereich des Gehäuses 5 mit Mitteln, beispielsweise Führungsnuten oder -stege, zur Aufnahme der entsprechenden Bauteile versehen.

Zur Komplettierung des Umbaus sind Durchbrüche zu einer Verbindung zur am Armaturenbrett angeordneten Bedienkonsole 22 sowie gegebenenfalls für Kondenswasserableitungen in der Wand zwischen Fahrzeuginnenraum und Motorraum vorzusehen und die entsprechenden Leitungen durchzuführen. Ferner ist die Bedienkonsole 22, welche bei der Basisversion beispielsweise lediglich ein Bedienelement 16 für die Gebläsedrehzahl aufweist, auf Grund des oder der neuen vom Nutzer einstellbaren Regelparameter, nämlich der Temperaturen, gegebenenfalls auch für unterschiedliche Temperierungs-Zonen, auszutauschen.

Damit ein einfacher Umbau möglich ist, weist das Kraftfahrzeug gemäß einer Variante auch in seiner Basisversion bezüglich des Systems eine Wand zwischen Fahrzeuginnenraum und Motorraum auf, in welcher sämtliche Öffnungen für die umfassendste Version des Systems entweder in Form einfach herausbrechbarer Bereiche oder durch abnehmbare Deckel geschlossene Bereiche vorgesehen sind. Zudem weist das Armaturenbrett auswechselbare Bereiche 14 auf, welche je nach Version ausgebildete Bedienkonsolen 22, Bedienelemente (16, 17, 18, 19, 20) und/oder Anzeigen aufweisen.

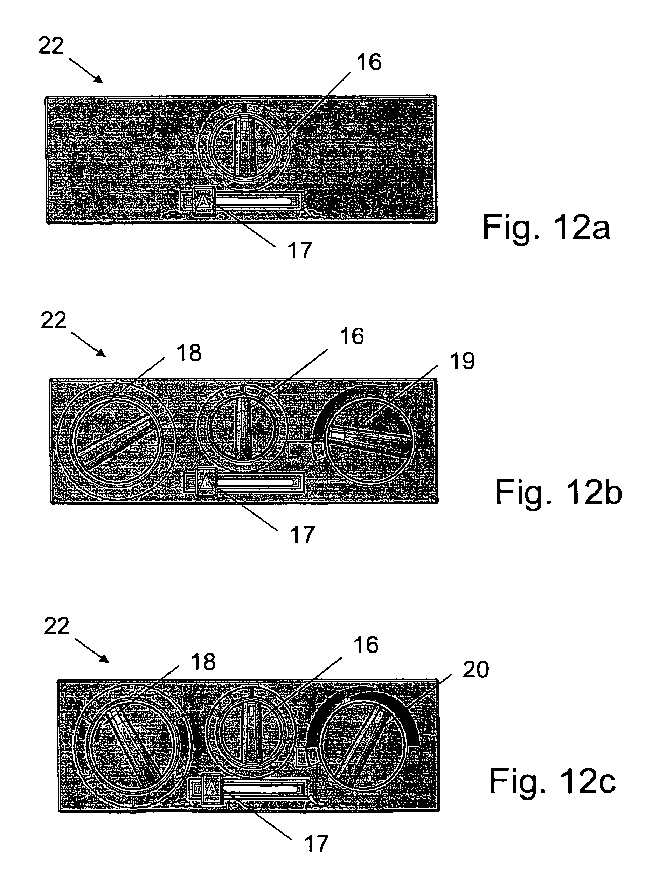

Beispielhafte Ausführungen einer modular erweiterbaren oder austauschbaren Bedienkonsole 22 sind in den Figuren 12a bis 12c dargestellt.

Fig. 12a zeigt eine Bedienkonsole 22 für die in Fig.1 dargestellte Basisversion eines Systems zur Kraftfahrzeug-Belüftung und/oder -Temperierung mit einem Bedienelement 16 zur Luftmengensteuerung und einem optionalen Bedienelement 17 zur Frischluft/Umluftumschaltung.

Eine modular erweiterte Version der Bedienkonsole 22 zeigt Fig. 12b. Zusätzlich sind hier ein Bedienelement 18 zur Wahl der Luftverteilung, beispielsweise zwischen unterschiedlichen Bereichen oder Zonen des Fahrzeuginnenraums und ein Bedienelement 19 zur Temperatursteuerung der Kühlung gemäß eines in Fig.3 dargestellten Systems zur Kraftfahrzeug-Belüftung und/oder -Temperierung. Die dargestellte Bedienkonsole 22 kann auch in wenig abgeänderter Weise für ein in Fig. 2 dargestelltes Systems zur Kraftfahrzeug-Belüftung und/oder -Temperierung eingesetzt werden, indem das Bedienelement 19 die Aufgabe der Temperatursteuerung zum Heizen übernimmt.

Ein zusätzliches Bedienelement 20 zur Temperatursteuerung für die Kühlungs- und Heizfunktion einer in Fig.4 dargestellten Version einer Bedienkonsole 22 eines Systems zur Kraftfahrzeug-Belüftung und/oder -Temperierung ist in Fig.12c gezeigt. Weitere Kombinationsmöglichkeiten entsprechend zusätzlicher Funktionalitäten sind so in modularer Bauweise auch auf die Bedienkonsole 22 übertragbar.

In allen Versionen des modularen Systems sind das gleiche Gebläse sowie die gleiche Luftverteilung vorgesehen. Als Erweiterungsmöglichkeiten sind insbesondere der Heizer 8, der Verdampfer 9, gegebenenfalls eine temperaturabhängige Regelbarkeit der Fahrzeuginnenraum-Temperatur bei Vorsehen eines Verdampfers 9, eines Heizers 8 und/oder der Einbau eines Luftfilters möglich, wobei, abgesehen von der Regelbarkeit die Erweiterungen einzeln oder in beliebigen Kombinationen möglich sind. Zudem kann auch eine erweiterte Version einfach und auf entsprechende Weise nochmals erweitert werden, wobei die gegenüber der Basisversion erweiterte Version - abgesehen von den Luftführungsgehäuse-Bereichen, welche zur zweiten Erweiterung entfernt werden müssen - im Wesentlichen nur ergänzt wird, das heißt die Bauteile, wie beispielsweise Heizer 8 mit Bereich 11, bleiben unverändert.

Eine Änderung von einer Linkslenker- auf eine Rechtslenkerversion und umgekehrt des erfindungsgemäßen Systems zur Kraftfahrzeug-Belüftung und/oder -Temperierung ist beispielsweise durch eine spiegelbildliche Variante des Systems, insbesondere durch spiegelbildliches Vertauschen des Frischluftansauggehäuses 15, des Motors 7 und des Motorhalters möglich.

### Bezugszeichenliste

- 1: Belüftungssystem
- 2: Gebläseanordnung
- 3: Luftkanal
- 4: Lufteinlassdüse
- 5: Luftführungsgehäuse
- 6: Lüfterrad
- 7: Motor
- 8: Heizer
- 9: Verdampfer
- 10: Bereich (Luftführungsgehäuse Basisversion)
- 11: Bereich (Heizer)
- 12: Bereich (Luftführungsgehäuse Basisversion)
- 13: Bereich (Verdampfer)
- 14: Bereich (Armaturenbrett)
- 15: Frischluftansauggehäuse
- 16: Bedienelement zur Luftmengensteuerung
- 17: Frischluft/Umluft- Bedienelement
- 18: Bedienelement zur Luftverteilung
- 19: Bedienelement zur Temperierung (Kühlen)
- 20: Bedienelement zur Temperierung (Kühlen/Heizen)
- 21: Temperiermittel
- 22: Bedienkonsole

## Patentansprüche

1. System zur Kraftfahrzeug-Belüftung und/oder -Temperierung mit einer Basisversion, welche zumindest eine Gebläseanordnung (2) aufweist, die Teil eines Kraftfahrzeug-Belüftungssystems (1) ist, wobei die Gebläseanordnung (2) zumindest ein in einem mehrteiligen Luftführungsgehäuse (5) angeordnetes Lüfterrad (6) und einen dieses Lüfterrad (6) antreibenden Motor (7) aufweist, und das weitere Belüftungssystem (1) aus einer Mehrzahl von Luftkanälen (3) und Lufteinlassdüsen (4) besteht, wobei das System modular erweiterbar ist, wofür mindestens ein Bereich (10, 12) des Luftführungsgehäuse (5), austauschbar ausgebildet ist, **dadurch gekennzeichnet, dass** die Ränder des Bereichs (10, 12) des Luftführungsgehäuses (5) als Sollbruchstellen ausgebildet sind.

2. System nach Anspruch 1, **dadurch gekennzeichnet, dass** an die Gebläseanordnung (2) durch Entfernen und Ersetzen eines Bereichs (10, 12) des Luftführungsgehäuses (5) ein Heizer (8) und/oder ein Verdampfer (9) mit einem entsprechenden Bereich (11, 13) des Luftführungsgehäuses (5) anbaubar ist.

3. System nach einem der vorhergehenden Ansprüche, **dadurch gekennzeichnet, dass** in das Luftführungsgehäuse (5) ein Luftfilter integrierbar ist.

4. System nach einem der vorhergehenden Ansprüche, **dadurch gekennzeichnet, dass** in das Luftführungsgehäuse (5) eine Temperatursteuerung integrierbar ist.

5. System nach einem der vorhergehenden Ansprüche, **dadurch gekennzeichnet, dass** in das Luftführungsgehäuse (5) zumindest ein Temperiermittel (21) integrierbar ist.

6. System nach einem der vorhergehenden Ansprüche, **dadurch gekennzeichnet, dass** das System eine Bedienkonsole (22) mit zumindest einem Bedienelement (16, 17, 18, 19, 20) aufweist, welches im Fahrzeuginnenraum angeordnet ist, wobei die Bedienkonsole in einem austauschbaren und/oder erweiterbaren Bereich (14) ausgebildet ist.

7. System nach einem der vorhergehenden Ansprüche, **dadurch gekennzeichnet, dass** das System eine Bedienkonsole (22) aufweist, die modular erweiter- oder austauschbar ist.

8. System nach einem der vorhergehenden Ansprüche, **dadurch gekennzeichnet, dass** das System mindestens eine Anzeige aufweist, welche im Fahrzeuginnenraum angeordnet ist, wobei die Anzeige in einem austauschbaren und/oder erweiterbaren Bereich (14) ausgebildet ist.

9. System nach einem der vorhergehenden Ansprüche, **dadurch gekennzeichnet, dass** der Motor (7) der Gebläseanordnung (2) modular austauschbar ausgebildet ist.

10. Kraftfahrzeug mit einem System zur Kraftfahrzeug-Belüftung und/oder - Temperierung mit einer Basisversion, welche zumindest eine Gebläseanordnung mit einem Belüftungssystem aufweist, wobei die Gebläseanordnung zumindest ein in einem mehrteiligen Luftführungsgehäuse angeordneten Lüfterrad aufweist und das Belüftungssystem aus einer Mehrzahl von Luftkanälen und Lufteinlassdüsen besteht, wobei das System nach einem der Ansprüche 1 bis 9 ausgebildet ist, **dadurch gekennzeichnet, dass** das Kraftfahrzeug eine Wand zwischen Fahrzeuginnenraum und Motorraum aufweist, in welcher sämtliche Öffnungen für die umfassendste Version des Systems vorgesehen sind und/oder dass das Armaturenbrett auswechselbare Bereiche aufweist, welche je nach Version Blenden oder Anzeigen aufweisen.

## Claims

1. System for ventilating and/or tempering a motor vehicle with a basic version, which exhibits at least one fan arrangement (2) that is part of a motor vehicle ventilation system (1), the fan arrangement (2) exhibiting at least one fan wheel (6) arranged in a multi-part air-conducting housing (5) and a motor (7) for driving this fan wheel (6), and the further ventilation system (1) consists of a plurality of air ducts (3) and air inlet nozzles (4), wherein the system is capable of expansion in a modular manner, for which purpose at least one area (10, 12) of the air-conducting housing (5) is embodied in a replaceable manner, **characterized in that** the edges of the area (10, 12) of the air-conducting housing (5) are designed as predetermined rupture points.

2. System as claimed in claim 1, **characterized in that** a heater (8) and/or an evaporator (9) with a corresponding area (11, 13) of the air-conducting housing (5) is capable of being installed on the fan arrangement (2) by the removal and replacement of an area (10, 12) of the air-conducting housing (5).

3. System as claimed in one of the foregoing claims, **characterized in that** an air filter is capable of being integrated into the air-conducting housing (5) .

4. System as claimed in one of the foregoing claims, **characterized in that** a temperature controller is capable of being integrated into the air-conducting housing (5).

5. System as claimed in one of the foregoing claims, **characterized in that** at least a tempering means (21) is capable of being integrated into the air-conducting housing (5).

6. System as claimed in one of the foregoing claims, **characterized in that** the system exhibits an operating control panel (22) with at least one operating element (16, 17, 18, 19, 20), which is arranged in the interior of the motor vehicle, the operating control panel being executed in a replaceable and/or extendable area (14).

7. System as claimed in one of the foregoing claims, **characterized in that** the system exhibits an operating control panel (22) that is capable of modular extension or exchange.

8. System as claimed in one of the foregoing claims, **characterized in that** the system exhibits at least one display, which is arranged in the interior of the vehicle, the display being executed in an exchangeable and/or expandable area (14).

9. System as claimed in one of the foregoing claims, **characterized in that** the motor (7) of the fan arrangement (2) is executed in a modularly exchangeable manner.

10. Motor vehicle having a system for ventilating and/or tempering a motor vehicle with a basic version, which exhibits at least one fan arrangement with a ventilation system, the fan arrangement exhibiting at least one fan wheel arranged in a multi-part air-conducting housing and the ventilation system consisting of a plurality of air ducts and air inlet nozzles, the system being executed according to one of claims 1 to 9, **characterized in that** the motor vehicle exhibits a bulkhead between the interior of the vehicle and the engine compartment, in which all orifices for the most comprehensive version of the system are provided and/or **in that** the dashboard exhibits interchangeable areas, which exhibit blanking panels or displays depending on the version.

## Revendications

1. Système servant à la ventilation et / ou à l'équilibrage de température d'un véhicule automobile et comprenant une version de base qui présente au moins un dispositif (2) formant ventilateur qui fait partie d'un système de ventilation (1) d'un véhicule automobile, où le dispositif (2) formant ventilateur présente au moins une roue de ventilateur (6) disposée dans un carter de guidage d'air (5) en plusieurs parties et un moteur (7) entraînant cette roue de ventilateur (6), et la partie restante du système de ventilation (1) se compose d'une pluralité de conduits d'air (3) et de buses d'entrée d'air (4), où le système est extensible de façon modulaire, système pour lequel au moins une zone (10, 12) du carter de guidage d'air (5) est conçue de façon interchangeable,
**caractérisé en ce que** les bords de la zone (10, 12) du carter de guidage d'air (5) sont configurés comme des points destinés à la rupture.

2. Système selon la revendication 1, **caractérisé en ce que**, par dépose et remplacement d'une zone (10, 12) du carter de guidage d'air (5), on peut monter, sur le dispositif (2) formant ventilateur, un dispositif de chauffage (8) et / ou un évaporateur (9) comprenant une zone correspondante (11, 13) du carter de guidage d'air (5).

3. Système selon l'une ou l'autre des revendications précédentes, **caractérisé en ce qu'**un filtre à air peut être intégré au carter de guidage d'air (5).

4. Système selon l'une quelconque des revendications précédentes, **caractérisé en ce qu'**une régulation de température peut être intégrée au carter de guidage d'air (5).

5. Système selon l'une quelconque des revendications précédentes, **caractérisé en ce qu'**au moins un moyen d'équilibrage de température (21) peut être intégré au carter de guidage d'air (5).

6. Système selon l'une quelconque des revendications précédentes, **caractérisé en ce que** le système présente une console de commande (22) comprenant au moins un élément de commande (16, 17, 18, 19, 20) qui est disposé dans l'habitacle du véhicule, où la console de commande est configurée dans une zone (14) interchangeable et / ou extensible.

7. Système selon l'une quelconque des revendications précédentes, **caractérisé en ce que** le système présente une console de commande (22) qui est extensible ou interchangeable de façon modulaire.

8. Système selon l'une quelconque des revendications précédentes, **caractérisé en ce que** le système présente au moins un affichage qui est disposé dans l'habitacle du véhicule, où l'affichage est configuré dans une zone (14) interchangeable et / ou extensible.

9. Système selon l'une quelconque des revendications précédentes, **caractérisé en ce que** le moteur (7) du dispositif (2) formant ventilateur est conçu en étant interchangeable de façon modulaire.

10. Véhicule automobile équipé d'un système servant à la ventilation et / ou à l'équilibrage de température d'un véhicule automobile et comprenant une version de base qui présente au moins un dispositif formant ventilateur comportant un système de ventilation, où le dispositif formant ventilateur présente au moins une roue de ventilateur disposée dans un carter de guidage d'air en plusieurs parties, et le système de ventilation se compose d'une pluralité de conduits d'air et de buses d'entrée d'air, où le système est configuré selon l'une quelconque des revendications 1 à 9, **caractérisé en ce que** le véhicule automobile présente une paroi placée entre l'habitacle du véhicule et le compartiment moteur, paroi dans laquelle sont prévues toutes les ouvertures pour la version la plus complète du système et / ou **en ce que** le tableau de bord présente des zones interchangeables qui, en fonction de la version, présentent des écrans ou des affichages.
